# EUROPEAN PATENT APPLICATION

(11) **EP 2 711 401 A1**
(43) Date of publication of application: **26.03.2014**
(21) Application number: 13185497.8
(22) Date of filing: 23.09.2013
(51) Int. Cl.: C09D 4/00, C09D 7/00, B05D 5/00, B32B 37/00

(54) **Method and apparatus for producing photoreaction product sheet**

(30) Priority: 24.09.2012 JP 2012209741
(71) Applicant: NITTO DENKO CORPORATION, Osaka 567 (JP)
(72) Inventor: Nakashima, Tooru, Ibaraki-shi, Osaka 567-8680 (JP); Akiyama, Jun, Ibaraki-shi, Osaka 567-8680 (JP)
(74) Representative: Grünecker, Kinkeldey, Stockmair & Schwanhäusser

(57) **Abstract**

A photo-reactive composition layer is formed on a support with transparency while the support is moved in one direction. Then the support is reversed in a first irradiating chamber as to be moved in a direction opposite to the one direction to generate a serpentine transport path. The support prior to reverse and the support subsequent to reverse face to each other serpentinely, and the support is irradiated with light from lamps for ultraviolet-ray emission. The entire photo-reactive composition layer on the serpentine support is photo-polymerized while the light transmits through the support and the photo-reactive composition layer formed on the support. Then photo-polymerization reaction of the photo-reactive composition layer is facilitated in a second irradiating chamber, adjacent to the first irradiating chamber, using lamps for ultraviolet-ray emission different from those used in the first irradiating chamber in property.

## Description

### Technical Field

This invention relates to a method and an apparatus for producing a photo-reaction product sheet that allows obtaining photo-reaction product layer by emitting light to a photo-reactive composition layer formed on a sheet-like, a tape-like, or a film-like support to cause the photo-reactive composition layer to undergo photo-reaction.

### Background Art

A known photo-reaction product sheet has been conventionally produced as under. Specifically, a film-like support is coated with photo-reactive composition layer in appropriate thickness. The coated photo-reactive composition layer undergoes photo reaction (polymerization reaction) through light irradiation, whereby a photo-reaction product layer is obtained. Examples of the photo-reaction product layer in the photo-reaction product sheet include a photo-polymerizable composition layer. Examples of the photo-reaction product sheet include a pressure-sensitive adhesive layer and a gel adhesive sheet. The pressure-sensitive adhesive layer is obtained by performing polymerization reaction through light irradiation to the formed photo-polymerizable composition layer. The gel adhesive sheet is obtained by performing crosslinking reaction through light to a photo-polymerizable composition. Examples of the photo-polymerizable composition sheet also include a base material, a film, and a sheet formed as the support used for the pressure-sensitive adhesive sheet or the adhesive sheet.

The support is coated with the photo-reactive composition layer while being fed repeatedly and moved. The coated support is irradiated with light, and the irradiated support is wound up. In this way, the photo-reaction product sheet is produced.

The photo-reactive composition undergoes photo-polymerization reaction while irradiation intensity of ultraviolet rays to an ultraviolet curable sheet varies stepwise. That is, variation in irradiation intensity causes control of a polymerization rate. For instance, in the first step, ultraviolet rays are applied with given intensity of luminance, and a fixed amount of the photo-reactive composition is polymerized. In the second step, ultraviolet rays are applied with higher intensity of luminance than in the first step, whereby an increased polymerization rate of the ultraviolet curable sheet is obtained. See Japanese Patent Publications No. JP-A-H02-60981, JP-A-H06-504809, and JP-A-H07-331198.

In another method, in the first step, an ultraviolet curable sheet is irradiated with ultraviolet rays with given intensity of luminance, and a fixed amount of the photo-reactive composition is polymerized. In the second step, ultraviolet rays are applied with lower intensity of luminance than in the first step, whereby an increased polymerization rate of the ultraviolet curable sheet is obtained with an enhanced production rate. See Japanese Patent Publication No. JP-A-H03-285974.

Another method is disclosed in which a photo-reaction product sheet is repeatedly transported between lamps for ultraviolet-ray emission for one or multiple times, the lamps being arranged linearly and in a zigzag pattern across the photo-reaction product sheet. Accordingly, light for ultraviolet ray polymerization is used efficiently. See Patent Publication No. JP-A-2003-145012.

### Summary of Invention

### Technical Problem

However, the conventional method has the following drawbacks.

In the method of varying ultraviolet-ray irradiation stepwise disclosed in JP-A-H02-60981, JP-A-H06-504809, JP-A-H07-331198, and JP-A-H03-285974, two or more types of lamps with different intensity have to be arranged on a linear transportation path. As a result, a production line becomes longer. In addition to this, two or more types of irradiation equipment have to be installed. Such disadvantage may arise.

Moreover, in the method adopted in JP-A-2003-145012, since the lamps are arranged closely in a narrow space, the photo-polymerizable composition may be damaged due to heat from the lamps. This causes a poor property of the photo-polymerizable composition. That is, it is substantially necessary to provide a distance between the lamps and the photo-polymerizable composition. Thus, the photo-polymerizable composition has to reciprocate on a pass line to reciprocate for two or more times. As a result, a disadvantage may arise such as upsized equipment.

### Solution to Problem

This invention has been made regarding the state of the art noted above, and its primary object is to provide a method and an apparatus for producing a photo-reaction product sheet that allow effective production of a high-quality photo-reaction product sheet with a simplified apparatus configuration.

In order to achieve the above object, the present invention is configured as follows.

One example of present invention discloses a method of producing a photo-reaction product sheet having a photo-reaction product layer obtained by performing photo-reaction to a photo-reactive composition layer formed on a support with light from irradiators. The method includes forming the photo-reactive composition layer on the support with transparency while moving the support in one direction, the photo-reactive composition layer having transparency as a photo-polymerizable composition layer used for obtaining a pressure-sensitive adhesive layer with photo-polymerization; reversing the support at least once as to move the support in a direction opposite to the one direction to generate a serpentine transport path; irradiating the support with light from a first irradiator in a first irradiating area in which the support prior to reverse and the support subsequent to reverse face to each other serpentinely; photo-polymerizing the entire photo-reactive composition layer on the serpentine support while transmitting the light through the support and the photo-reactive composition layer formed on the support; and photo-polymerizing the photo-reactive composition layer by emitting the light thereto in a second irradiating area, adjacent to the first irradiating area, with a second irradiator arranged therein having a light source different from that of the first irradiator in property.

According to the foregoing method, the light emitted to the support with the photo-reactive composition formed thereon that is transported serpentinely (in a zigzag manner) is transmitted through the support and the photo-reactive composition layer. That is, every photo-reactive composition formed on the support is photo-polymerized. Thus light emitted in one direction can be effectively used. Consequently, the photo-reaction product component with a rate of polymerization close to a target rate of polymerization can be obtained through polymerization reaction in the first irradiating area while the number of light sources in the first irradiator (e.g., lamps) used in the first irradiating area is decreased.

Moreover, the support is transported to the second irradiating area adjacent to the first irradiating area, the support having the photo-reactive composition formed therein with the rate of polymerization close to a target rate of polymerization. This achieves the photo-reactive composition with the target rate of polymerization reaction. Especially, the light source in the second irradiating area is used that is different in property from that in the first irradiating area. This further facilitates polymerization of the photo-reactive composition layer. Here, the photo-reactive composition has a rate of polymerization close to the target rate of polymerization in the first irradiating area. Consequently, a light irradiation time in the second irradiating area can be shorter than that in the first irradiating area. In other words, the number of the light source in the second irradiating area becomes smaller than that in the first irradiating area. Consequently, the photo-reaction product sheet of high quality can be produced efficiently with the reduced number of the light source.

In the foregoing method, the light may be applied to the support reversed in the first irradiating area and transported serpentinely from outside of at least either the lowermost stage or the uppermost stage of the support.

In this method, when light is applied on one side, light intensity decreases as light transmits the serpentine photo-reaction product component and the support. As a result, timing for facilitating photo-polymerization can be set for the upper stage or the lower stage. In addition, when the support is reversed for many times, light is applied on both the lowermost and uppermost stages. As a result, stable light intensity can be achieved.

In this method, it is preferable that intensity of the light from the irradiator to the support in the first irradiating area is controlled. For instance, an irradiation distance of the light may be changed with variation in diameter of a roll for reversing the support. Alternatively, output voltages of the light irradiator may be controlled.

The photo-reactive composition layer may be formed not only on one face of the support but also on both front and rear faces of the support. Since light transmits through the support and the photo-reactive component layer, the serpentine photo-reactive component layer allows the every photo-reactive component to undergo photo-polymerization.

Moreover, the photo-reactive composition layer formed on an optical transparent separating liner is joined to the support. The support is irradiated with light while the photo-reactive composition layer is covered with the optical transparent separating liner, whereby the photo-reactive composition layer is photo-polymerized. Such process may be adopted.

According to this method, light acts on the photo-reactive composition layer while transmitting through the optical transparent separating liner. At this time, an unreacted photo-reactive composition is blocked by the optical transparent separating liner. That is, contamination and decrease in light irradiation of the light irradiator due to the unreacted photo-reactive composition can be prevented. In particular, when the photo-reaction product component is composed of a photo-reaction component layer undergoing photo-polymerization with light from the light irradiator to obtain a pressure-sensitive adhesive layer, the photo-reactive composition layer exposed to the atmosphere leads to evaporation of an unreacted monomer along with the photo-polymerization reaction. On the other hand, since the monomer is blocked by the optical transparent separating liner to adhere on the liner, the contamination and decrease in light intensity of the light irradiator due to the unreacted photo-reactive composition can be prevented. Moreover, when the optical transparent separating liner is separated from the pressure-sensitive adhesive layer, only the optical transparent separating liner is separated with the pressure-sensitive adhesive layer being on the support.

Where the photo-reaction product sheet is obtained by covering the photo-reactive composition layer on the support with the optical transparent separating liner, a photo-reaction rate of the photo-reactive composition layer is preferably set to be 20% or more in order to avoid protrusion of the unreacted photo-reactive composition over the optical transparent separating liner upon reversing the support firstly.

Moreover, in the foregoing method, a laminate of the support and the photo-reactive composition (formed on one face or both faces), and a laminate composed of the support, the photo-reactive composition (formed on one face or both faces) and the optical transparent separating liner each have transmittance of 10% or more, preferably 30% or more, more preferably 50% or more. The number of times of reversing the support, the number of lamps, light intensity, etc. are appropriately modified in accordance with the transmittance.

Moreover, the light intensity on the photo-reaction composition layer on the support transported within the first irradiating area preferably lies in a range of 0.1 to 15 mW/cm².

This invention also adopts the configuration as stated below to accomplish such object.

Another aspect of present invention discloses an apparatus for producing a photo-reaction product sheet having a photo-reaction product layer obtained by performing photo-reaction to a photo-reactive composition layer formed on a support with light from irradiators. The apparatus includes a coating device configured to coat the support with the photo-reactive composition layer with transparency while moving the support with transparency in one direction, the photo-reactive composition layer being a photo-polymerizable composition layer undergoing photo-polymerization with light from the light irradiators to obtain a pressure-sensitive adhesive layer; a reversing mechanism configured to reverse the support so as to move in a direction opposite to the one direction; a first irradiator configured to perform photo-polymerization to the entire serpentine photo-reactive composition layer on the support while light transmits through the support and the photo-reactive composition layer formed on the support in a first irradiating area in which a serpentine transportation path is formed with the support prior to reverse and the support subsequent to reverse facing to each other serpentinely; and a second irradiator configured to perform photo-polymerization to the photo-reactive composition layer on the support with a light source arranged therein different in property from that of the first irradiator.

This configuration may achieve suitable implementation of the above method.

In the foregoing construction, the first irradiator may irradiate the support in the first irradiating area with the light from outside of at least either the lowermost stage or the uppermost stage of the support that is reversed and transported serpentinely (in a zigzag manner).

### Advantageous Effects of Invention

According to the method and apparatus of producing the photo-reaction product sheet of present invention, every photo-reactive composition in the support is photo-polymerized with light while the light is transmitted through the support and the photo-reactive composition layer, the light being emitted to the support transported serpentinely with the photo-reactive composition formed thereon. Consequently, a reduced number of light sources, such as a lamp or a fluorescent tube, can be achieved.

In addition, dividing the irradiating area of light to the support allows suitable selection of polymerization stepwise. Consequently, the photo-reaction product sheet of high quality can be produced with high efficiency.
It is to be understood that both the foregoing general description and the following detailed description are exemplary and explanatory and are intended to provide further explanation of the invention as claimed.

### Brief Description of Drawings

For the purpose of illustrating the invention, there are shown in the drawings several forms which are presently preferred, it being understood, however, that the invention is not limited to the precise arrangement and instrumentalities shown.
Figures 1 and 2 are schematic front views each illustrating a conventional apparatus.
Figure 3 is a schematic front view of an apparatus of producing a photo-reaction product sheet according to Embodiment 1.
Figure 4 is a schematic front view of an apparatus of producing a photo-reaction product sheet according to Embodiment 2.
Figure 5 is a schematic front view of a modified apparatus.

### Description of Embodiments

Hereinafter, description will be given of an embodiment of the present invention with reference to the drawings.

### Embodiment 1

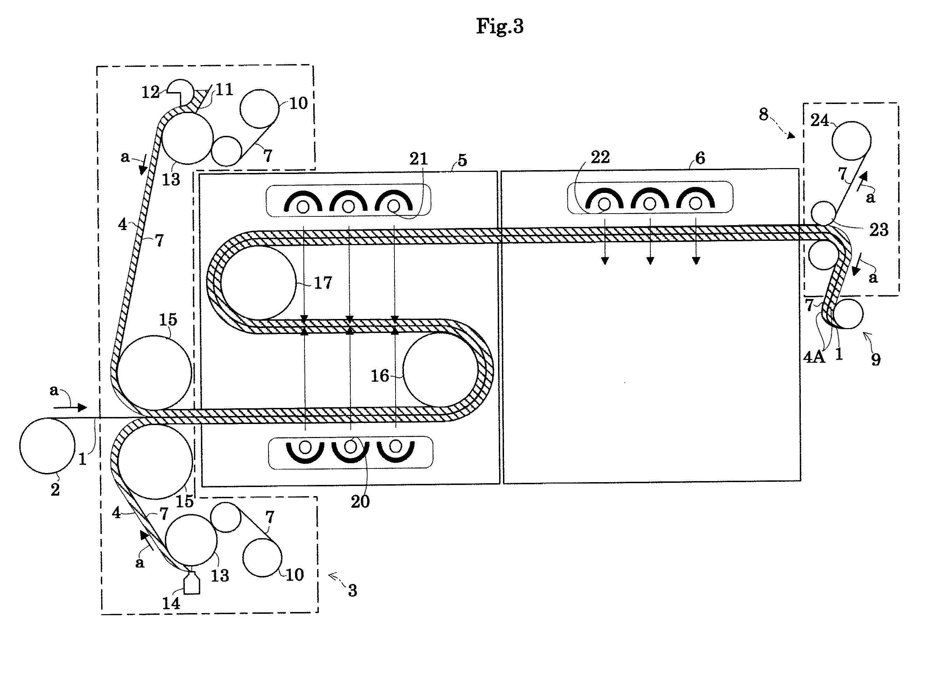

As shown in Figure 3, an apparatus of producing a photo-reaction product sheet according to one example of the invention includes a support supplying roll 2, a coater 3, a first irradiating chamber 5, a second irradiating chamber 6, a separator 8, and a support winding section 9.

The support supplying roll 2 feed outs and supplies a sheet-like, tape-like, or film-like support (base material) 1.

The coater 3 coats the support 1 fed out from the support supplying roll 2 with a photo-polymerizable composition (hereinafter, referred to as a "photo-polymerizable composition 4" appropriately) in a given thickness.

The first and second irradiating chambers 5 and 6 emit light to the photo-polymerizable composition 4 with which both the faces of the support 1 are coated. Here, the second irradiating chamber 6 is adjacent to the first irradiating chamber 5.

The separator 8 separates an optical transparent separating liner 6, mentioned later, from the support 1.

The support winding section 9 winds up the support 1 on which a pressure-sensitive adhesive layer 4A is provided. The pressure-sensitive adhesive layer 4A is obtained through performing photo-polymerization reaction to the photo-polymerizable composition 4 during transportation within the first and second irradiating chambers 5 and 6. Each component will be described in detail hereinafter. Here, the photo-polymerizable composition layer 4 corresponds to the photo-reactive composition in this example of the invention.

The band-shaped support 1 wound around the support supplying roll 2 is composed of a transparent material. For instance, a plastic film such as a polyester film is used as the support 1.

The photo-polymerizable composition layer 4 with transparency contains monomers or partially-polymerized monomers and a photo-polymerization initiator and is polymerized upon light irradiation, thereby being formed into a pressure-sensitive adhesive. Examples of the photo-polymerizable composition include an acrylic, polyester, or epoxy photo-polymerizable composition. Among them, the acrylic photo-polymerizable composition is particularly preferably used. Description will be given hereinafter of each component of the photo-polymerizable composition used in this example of the invention.

In this example of the invention, as the photo-polymerizable composition 9, monomers consisting of an alkyl acrylate monomer as a main component, and a copolymerizable monomer containing a polar group are preferably used. Examples of the alkyl acrylate monomer in this example of the invention include a vinyl monomer whose main component is a (meth)acrylic acid ester. More specifically, one or more monomers selected from those whose alkyl group has 1 to 14 carbon numbers are used as the main component, e.g., alkyl acrylate, alkyl methacrylate, in which the alkyl group may be partially substituted with hydroxy group; each of these contains an alkyl group, such as a methyl group, an ethyl group, a propyl group, a butyl group, an isobutyl group, a pentyl group, an isopentyl group, a hexyl group, a heptyl group, an octyl group, an isooctyl group, a nonyl group, an isononyl group, a decyl group, or an isodecyl group.

Moreover, examples of the copolymerizable monomer containing a polar group include an unsaturated acid, such as (meth)acrylate, itaconic acid, or 2-acrylamide propanesulphonic acid; a monomer containing a hydroxyl group, such as 2-hydroxyetyl(meth)acrylate, or 2-hydroxypropyl(meth)acrylate; and caprolactone(meth)acrylate. In addition, the copolymerizable monomer is not necessarily a monomer, and may be a dimer, such as a (meth)acrylic acid dimer.

Monomers comprising an alkyl acrylate monomer as the main component and a copolymerizable monomer containing polar groups are used in a ratio of 70 to 99 % by weight to 30 to 1 % by weight, more preferably 80 to 96 % by weight to 20 to 4 % by weight. When the above monomers are used in a ratio within the above ranges, a favorable balance in terms of adhesiveness, cohesive strength, and the like can be attained.

Moreover, examples of a photo-polymerization initiator include a benzoin ether, such as benzoin methyl ether or benzoin isopropyl ether; a substituted benzoin ether, such as anisole methyl ether; a substituted acetophenone such as 2·2-diethoxyacetophenone; or 2·2-dimethoxy-2-phenyl acetophenone; a substituted-α-ketol, such as 2-methyl-2-hydroxy propiophenone; an aromatic sulfonyl chloride, such as 2-naphtalene sulfonyl chloride; and a photoactive oxime, such as 1-phenyl-1·1-propanedione-2-(o-ethoxycarbonyl)-oxime. The usage amount of such a photo-polymerization initiator is preferably 0.01 to 5 parts by weight, and more preferably 0.1 to 3 parts by weight, with respect to 100 parts by weight of total of the monomers comprising alkyl acrylate monomers serving as the main component and the copolymerizable monomers containing a polar group. When the amount of the photo-polymerization initiator falls below the above range, the polymerization velocity is decreased, whereby monomers tend to remain in large quantity, which is unfavorable from an industrial viewpoint. In contrast, when the amount of the same exceeds the range, molecular weight of the polymer is reduced, which leads to a decrease in cohesive strength of the adhesive. As a result, preferable adhesive property cannot be obtained.

In addition, as a crosslinking agent in this example of the invention, a polyfunctional acrylate monomer is used. Examples thereof include an alkyl aclylate monomer containing two or more functional groups, such as trimethylolpropane triacrylate, pentaerythritol tetraacrylate, 1·2-ethyleneglycol diacrylate, 1·6-hexanediol diacrylate, and 1·12-dodecanediol diacrylate. A usage amount of the multifunctional acylate monomer depends on the number of the functional groups, and is preferaby 0.01 to 5 parts by weight, and more preferably 0.1 to 3 parts by weight, with respect to 100 parts total of the monomer comprising the alkyl acrylate monomer serving as the main component and the copolymerizable monomer containing a polar group. When the multifunctional acylate monomer is used in a ratio within the above range, favorable cohesive strength is maintained.

In addition, another crosslinking agent other than the multifunctional acrylate may be used in combination, depending on the purposes of the adhesive. Examples of the crosslinking agent to be used in combination include those that are generally used, such as an isocyanate crosslinking agent, an epoxy crosslinking agent, and an aziridine crosslinking agent. In the present invention, additives such as a tackifier may be used as necessary.

In this example, the optical-transparent separating liner 7 having light transmittance of 70% or more is used, whereby required light transmittance can be acquired. The optical-transparent separating liner 7 with light transmittance of 80% or more is more preferable, and that with visible light transmittance of 90% or more is more preferable. The optical-transparent separating liner 7 has enough heat resistance to endure treatment within the first and second irradiating chambers 5 and 6. Examples of the optical-transparent separating liner 7 with such properties include a polyester film. The dose of irradiation light transmitted through the optical-transparent separating liner 7 is optionally set in accordance with properties required for such as the pressure-sensitive adhesive layer. Here in this example, the dose usually falls within a range of 100 to 30000 mJ/cm², more preferably of 1000 to 10000 mJ/cm², more preferably of 2000 to 8000 mJ/cm².

Light transmitted through the optical transparent separating liner 7 is not particularly limited in its wavelength. The wavelength is suitably selected in accordance with type and the use of the photo-polymerizable composition layer. For instance, when the photo-polymerization initiator used for reaction has an absorption band for long wavelength ultraviolet radiation (e.g., 400 nm or more), an optical-transparent separating film having a wavelength around the absorption band with high optical transmittance can also be selected. Alternatively, where a photo-polymerization reaction is performed using light with visible light domain, an optical-transparent separating film with high optical transmittance of visible light domain may be selected.

For instance, where the photo-polymerizable composition layer is a pressure sensitive adhesive layer, the optical transparent separating liner 7 preferably has a property of cutting short wavelength light. The reason thereof is as under. That us, irradiation of the photo-polymerizable composition layer with light containing short wavelength decreases release properties of the base material 1 and the pressure-sensitive adhesive layer produced through photo-polymerization. Since this is inconvenient for a so-called double-faced adhesive sheet, light with short wavelength is cut through the optical transparent separating liner 7. Specifically, as the optical transparent separating liner 7, a film that enables to cut short wavelength light (e.g., of 300 nm or less) by 90% or more is preferable, more preferably by 93% or more, more preferably 95% or more.

Now, reference is again made to Figure 3. The coater 3 coats the support 1 fed out from the support supplying roll 2 with the photo-polymerizable composition 4. At this time the coater 3 coats the front and rear faces of the support 1 with the photo-polymerizable composition 4 such that the support 1 has a given thickness in a width direction of the support 1. For instance, the coater 3 is provided with a comma coater (fountain die coater) and a (fountain) die coater across the support 1. Here, the photo-polymerizable composition 4 with which front face of the support 1 is to be coated may contain the same composition as or different composition from that with which the rear face of the support 1 is to be coated.

The comma coater includes an optical-transparent separating-liner supplying roll 10, a liquid supply tank 11, a comma roll 12, and a backup roll 13.

The optical-transparent separating-liner supplying roll 10 feeds out and supplies the optical transparent separating liner 7.

The liquid supply tank 11 supplies the photo-polymerizable composition 4 to the optical transparent separating liner 7 fed out from the optical-transparent separating-liner supplying roll 10.

The comma roll 12 applies the photo-polymerizable composition 4 that is supplied from the liquid supply tank 11 to the optical transparent separating liner 7.

The backup roll 13 transports the optical transparent separating liner 7 with the photo-polymerizable composition 4 coated thereon on the front face of the support 1.

Similar to the coater across the support 1, the die coater includes the optical-transparent separating-liner supplying roll 10, the backup roll 13, and additionally a lip coater 14.

The lip coater 14 coats the optical transparent separating liner 7 fed out from the optical-transparent separating-liner supplying roll 10with the photo-polymerizable composition 4.

The coater 3 further includes a pair of upper and lower coating rolls 15 for joining the optical transparent separating liner 7 with the photo-polymerizable composition 4 coated thereon to both faces of the support 1 approximately simultaneously.

The optical transparent separating liner 7 coated with the photo-polymerizable composition 4 is joined to both faces of the support 1 approximately simultaneously with the coating roll 15. Thereby, both the faces of the support 1 are coated with the photo-polymerizable composition 4. Here, the optical transparent separating liner 7 joined to the front face of the support 1 may have the same property as or different properties from the optical transparent separating liner 7 joined to the rear face of the support 1.

The coater 3 is not limited to the comma coater or the die coater mentioned above. It may be of another coating type, such as a reverse coater or a gravure coater. That is, an approach of controlling a thickness of the photo-polymerizable composition 4 can also vary appropriately in accordance with each coating type.

The first irradiating chamber 5 applies light to the photo-polymerizable composition layer 4 with which both the faces of the support 1 are coated. The first irradiating chamber 5 is provided with a first transport roll 16, a second transport roll 17, first lamps 20 for ultraviolet-ray emission, and second lamps 21 for ultraviolet-ray emission.

The first transport roll 16 reverses the support 1 such that the support may be moved in a direction opposite to the moving direction of the support 1 fed out from the support supplying roll 2 (i.e., a-direction shown in Figure 3.)

The second transport roll 17 reverses the support 1 such that the support 1 may be moved in a direction opposite to the moving direction of the support 1 reversed by the first transport roll 16.

The two or more first lamps 20 for ultraviolet-ray emission applies light to the rear face of an opposite face of the support 1 until the first transport roll 16 firstly reverses the support 1.

The second transport roll 17 reverses the support 1 finally, and thereafter the two or more second lamps 21 for ultraviolet-ray emission irradiate the rear face of the opposite face of the support 1.

Here, the first irradiating chamber 5 corresponds to the first irradiating area in present invention. The first and second transport rolls 16 and 17 correspond to the reversing mechanism in present invention. The first and second lamps 20 and 21 for ultraviolet-ray emission correspond to the light source in present invention. The two or more first and second lamps 20 and 21 for ultraviolet-ray emission constitute the first light irradiator in present invention.

The second irradiating chamber 6 is provided with two or more third lamps 22 for ultraviolet-ray emission facing the support 1. The third lamp 22 for ultraviolet-ray emission in the second irradiating chamber 6 in this example has a property different from that in the first irradiating chamber 6. The second irradiating chamber 6 emits light to the photo-polymerizable composition layer 4 undergoing photo-polymerization reaction on both faces of the support 1 transported from the first irradiating chamber 5, thereby facilitating the photo-polymerization reaction. Here, the second irradiating chamber 6 corresponds to the second irradiating area in present invention. The third lamps 22 for ultraviolet-ray emission correspond to the light source in present invention. The two or more third lamps 22 for ultraviolet-ray emission constitute the second light irradiator in present invention.

Examples of the lamp for ultraviolet-ray emission in the first and second irradiating chambers 5 and 6 include a high-pressure discharge lamp such as a metal halide lamp and a high-pressure mercury lamp, or a low-pressure discharge lamp such as a chemical lamp, a black light lamp, and an insectivorous fluorescent lamp. In addition to this, an electrodeless UV lamp that emits light through converting microwave generated by a magnetron into light energy may be used. Moreover, an ultraviolet wavelength LED (Light Emitting Diode) with light-emitting elements of an ultraviolet wavelength may be used. Although combination of two or more types of lamps may be adopted in each of the first and second irradiating chambers 5 and 6, lamps having different properties are used in both the first and second irradiating chambers 5 and 6.

Where the support 1 is coated with the photo-polymerizable composition 4 using the optical transparent separating liner 7, a lower polymerization rate upon first reverse of the support 1 in the first irradiating chamber 5, i.e., upon reverse of the support 1 by the first transport roll 16, causes the monomer as the unreacted photo-polymerizable composition to protrude over the optical transparent separating liner 7. In order to avoid this, luminance of the first lamps 20 for ultraviolet-ray emission (occasionally, also luminance of the second lamps 21 for ultraviolet-ray emission) is preferably set such that the polymerization rate is 20% or more upon first reverse of the support 1. Moreover, it is more preferably that luminance of the first and second lamps 20 and 21 for ultraviolet-ray emission is preferably set such that the polymerization rate is 50% or more. Furthermore, it is more preferably that luminance of the first and second lamps for ultraviolet-ray emission 20 and 21 is preferably set such that the polymerization rate is 70% or more. The luminance of the first and second lamps for ultraviolet-ray emission 20 and 21 influences the degree of polymerization of the polymer obtained through photo-polymerization. Thus the luminance is 0.1 to 5000mW/cm², preferably 1 to 1000mW/cm², more preferably 1 to 100mW/cm².

Wrinkles may occur upon reverse of the support 1. Thus a film thickness of coating the photo-polymerizable composition 4 is preferably 400 µm or less. In addition a rotation diameter upon reverse is preferably 300 mm or more. This can be easily achieved by an approach of setting a diameter of the transport roll to be 300 mm or more, or combination of two or more transport rolls having a diameter smaller than 300 mm. These approaches are not limitative. Any reversing device can be adopted.

Upon first reverse of the support 1 in the first irradiating chamber 5, i.e., upon reverse of the support 1 by the first transport roll 16, the apparatus according to this example of the invention is controlled such that a polymerization rate of the photo-polymerizable composition layer 4 is at least 20% or more. A rate of photo-polymerization of the photo-polymerizable composition layer 4 of 20% or more is detected from samples obtained through irradiation experiments. That is, irradiation experiments are conducted, under various conditions such as irradiation quantity in the first irradiating chamber 5 (i.e., the first and second lamps for ultraviolet-ray emission 20 and 21), to a sample with the support 1 being coated with the photo-polymerizable composition 4 pursuant to specifications of the product to be manufactured. The detection can be obtained experimentally through determining the photo-polymerization rate of the sample after the experiment. The photo-polymerization rate is determined, for example, through determining a rate of residue (weight subsequent to heating/weight prior to heating x 100) upon heating with an air forced oven at 130°C for two hours.

The separator 8 includes a separation roll 23 and a winding roll 24.

The separation roll 23 separates the optical transparent separating liner 7 on the surface of the support 1. The winding roll 24 winds up the separated optical transparent separating liner 7.

In the separator 8, the optical transparent separating liner 7 on the front face of the support 1 and is separated by the separation roll 23, and is wound by the winding roll 24. The support 1 and the optical transparent separating liner 7 on the rear face of the support 1 are integrally wound by the support winding section 9. Upon this, it is desirable to provide a wind correction device for preventing weaving. The optical transparent separating liner 7 on the front face side of the support 1 is separated from the support 1. Thereby, the support 1 includes on both faces thereof a pressure-sensitive adhesive 4A obtained by photo-polymerizing the photo-polymerizable composition layer 4 through light irradiation. Moreover, the support 1 includes the optical transparent separating liner 7 joined to the rear face thereof.

This invention may be embodied as the following aspects.

### Embodiment 2

In this embodiment, a construction of first and second irradiating chambers 5 and 6 differs from that of the apparatus in Embodiment 1 mentioned above. Accordingly, like reference numerals are used to identify like elements that are the same as in Embodiment 1 and only the element with different construction from that in Embodiment 1 will be described in detail.

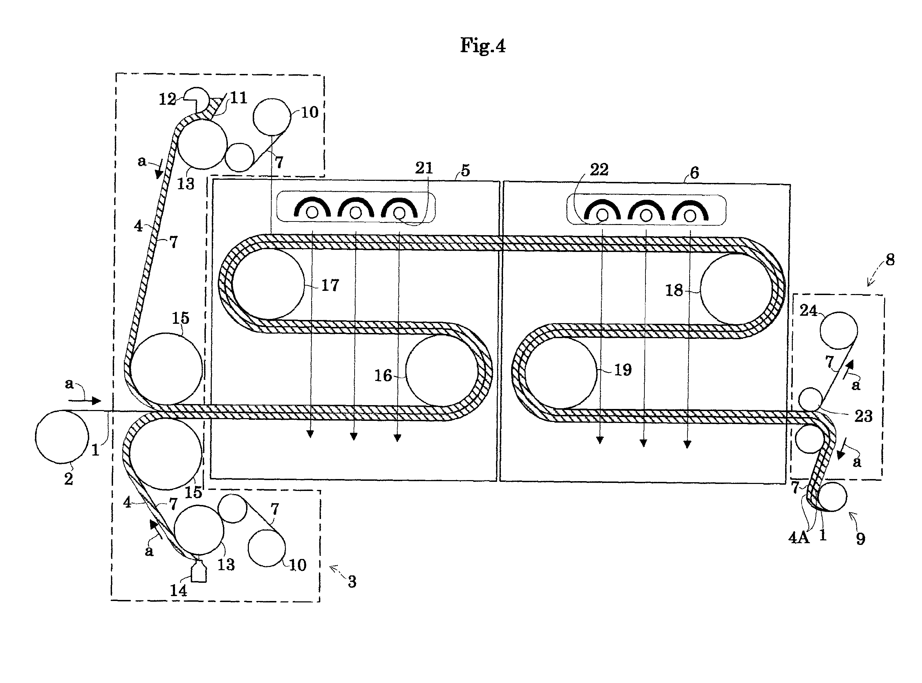

As illustrated in Figure 4, a first irradiating chamber 5 has the same construction as the first irradiating chamber 5 in Embodiment 1 mentioned above except the first lamps for ultraviolet-ray emission 20.

The second irradiating chamber 5 is provided with a third transport roll 18, a fourth transport roll 19, and two or more first lamps 22 for ultraviolet-ray emission.

The third transport roll 18 reverses the support 1 such that the support 1 may be moved in a direction opposite to the moving direction of the support 1 transported from the first irradiating chamber 5.

The fourth transport roll 19 reverses the support 1 such that the support 1 may be moved in a direction opposite to the moving direction of the support 1 reversed by the third transport roll 18.

The two or more third lamps 22 for ultraviolet-ray emission irradiate the rear face of the opposed face of the support 1 with light until the third transport roll 18 firstly reverses the support 1.

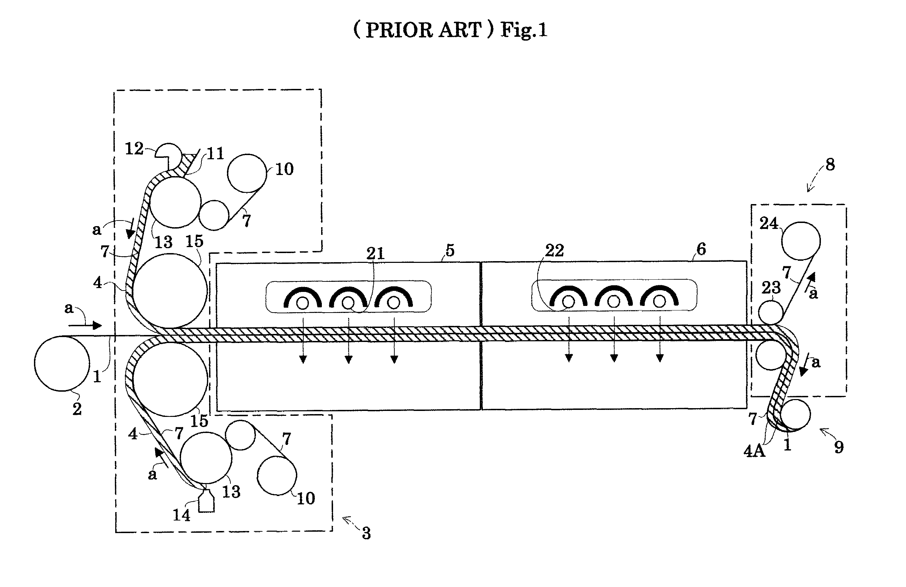

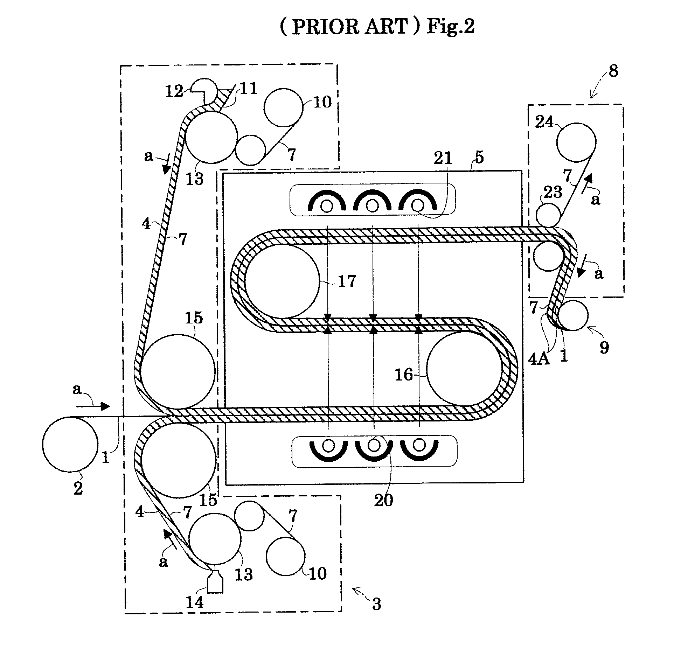

Examples will be described hereinafter. The examples are an example of a pressure-sensitive adhesive sheet obtained by the apparatus shown in Figures 3 and 4, and a comparative example of a pressure-sensitive adhesive sheet obtained by the conventional apparatus shown in Figures 1 and 2.

### Examples

A siliconized polyethylene film of 38 µm was used for the optical transparent separating liner 7 for cutting short-wavelength light in photo-polymerization.

Photo-polymerizable composition was obtained as follows. Photo-polymerizable composition was obtained as follows. 90 parts by weight of 2-Ethylhexylacrylate (2EHA) as a main monomer consisting of an alkyl acrylate monomer, 10 parts by weight of acrylic acid (AA) as a copolymerizable monomer containing a polar group, and 0.05 parts by weight of 2·2-dimethoxy-2-pheny acetophenone as a photo-polymerization initiator were placed in a four-neck flask, and partial photo-polymerization was performed by exposure to UV irradiation under a nitrogen atmosphere to give a partially polymerized syrup. Then 0.04 parts by weight of 1,6-hexanediol diacrylate as the crosslinking agent was added to 100 parts by weight of the partially polymerized syrup, and they were uniformly mixed to give a photo-polymerizable composition.

### Example 1

Experiments using the apparatus illustrated in Figure 3 were performed. The support 1 was coated with the photo-polymerizable composition 4 in the coater 3 such that the photo-polymerizable composition 4 has a thickness of 230 µm including the support 1. 90 black lights were used for each the first and second lamps 20 and 21 for ultraviolet-ray emission for light irradiation in the first irradiating chamber 5. The luminance on the support 1 is set to be 3.4 mW/cm² on the first stage prior to reverse by the first transport roll 16, to be 2.4 mW/cm²on the second stage from the first transport roll 16 to the second transport roll 17, and to be 1.9 mW/cm² on the third stage from the second transport roll 17 to the front of the second irradiating chamber 6.

Three metal halide lamps were used for the third lamp 22 for ultraviolet-ray emission in the second irradiating chamber 6. Every luminance of the lamps was set to be 8.3 mW/cm².

In addition, a movement speed (line speed) of the support 1 was set to be 8 m/min. Coating and photo-polymerization were performed at the movement speed to determine a rate of polymerization of the photo-polymerizable composition, whereby the examples were obtained.

### Example 2

Experiments were performed using the apparatus illustrated in Figure 1 having a modified first irradiating chamber 5. The support 1 was coated with the photo-polymerizable composition 4 in the coater 3 such that the photo-polymerizable composition 4 has a thickness of 230 µm including the support 1. 90 black lights were used not for the first lamp 20 for ultraviolet-ray emission but for the second lamp 21 for ultraviolet-ray emission for light irradiation in the first irradiating chamber 5. The luminance on the support 1 is set to be 2.7 mW/cm² on the first stage prior to reverse by the first transport roll 16, to be 1.5 mW/cm²on the second stage from the first transport roll 16 to the second transport roll 17, and to be 0.9 mW/cm² on the third stage from the second transport roll 17 to the front of the second irradiating chamber 6.

Three metal halide lamps were used for the third lamp 22 for ultraviolet-ray emission in the second irradiating chamber 6. Every luminance of the lamps was set to be 8.3 mW/cm².

In addition, a movement speed (line speed) of the support 1 was set to be 8 m/min. Coating and photo-polymerization were performed at the movement speed to determine a rate of polymerization of the photo-polymerizable composition, whereby the examples were obtained.

### Example 3

Experiments using the apparatus illustrated in Figure 4 were performed. The support 1 was coated with the photo-polymerizable composition 4 in the coater 3 such that the photo-polymerizable composition 4 has a thickness of 230 µm including the support 1. 90 black lights were used for the second lamp 21 for ultraviolet-ray emission for light irradiation in the first irradiating chamber 5. The luminance on the support 1 is set to be 2.7 mW/cm² on the first stage prior to reverse by the first transport roll 16, to be 1.5 mW/cm² on the second stage from the first transport roll 16 to the second transport roll 17, and to be 0.9 mW/cm² on the third stage from the second transport roll 17 to the front of the second irradiating chamber 6.

Three metal halide lamps were used for the third lamp 22 for ultraviolet-ray emission in the second irradiating chamber 6. The luminance on the support 1 was set to be 8.3 mW/cm² on the first stage from entering into the second irradiating chamber 6 until before reverse by the third transport roll 18, to be 7.6 mW/cm² on the second stage from the third transport roll 18 to the fourth transport roll 19, and to be 7.2 mW/cm² on the third stage from the fourth transport roll 19 to the front of the second irradiating chamber 6.

In addition, a movement speed (line speed) of the support 1 was set to be 8 m/min. Coating and photo-polymerization were performed at the movement speed to determine a rate of polymerization of the photo-polymerizable composition, whereby the examples were obtained.

### Comparative Example 1

Experiments using the apparatus shown in Figure 1 were performed. That is, the support was transported linearly through the first and second irradiating chambers 5 and 6. The support 1 was coated with the photo-polymerizable composition 4 in the coater 3 such that the photo-polymerizable composition 4 has a thickness of 230 µm including the support 1. 90 black lights were used for the second lamp 21 for ultraviolet-ray emission for light irradiation in the first irradiating chamber 5. Every luminance of the lamps was set to be 2.7 mW/cm².

Three metal halide lamps were used for the third lamp 22 for ultraviolet-ray emission in the second irradiating chamber 6. Every luminance of the lamps was set to be 8.3 mW/cm².

In addition, a movement speed (line speed) of the support 1 was set to be 8 m/min. Coating and photo-polymerization were performed at the movement speed to determine a rate of polymerization of the photo-polymerizable composition, whereby the examples were obtained.

### Comparative Example 2

Experiments using the apparatus shown in Figure 2 were performed. That is, the apparatus only includes the first irradiating chamber 5. The support 1 was coated with the photo-polymerizable composition 4 in the coater 3 such that the photo-polymerizable composition 4 has a thickness of 230 µm including the support 1. 90 black lights were used for each the first lamp 20 for ultraviolet-ray emission and the second lamp 21 for ultraviolet-ray emission for light irradiation in the first irradiating chamber 5. The luminance on the support 1 is set to be 3.4 mW/cm² on the first stage prior to reverse by the first transport roll 16, to be 2.4 mW/cm² on the second stage from the first transport roll 16 to the second transport roll 17, and to be 1.9 mW/cm² on the third stage from the second transport roll 17 to the front of the second irradiating chamber 6.

In addition, a movement speed (line speed) of the support 1 was set to be 8 m/min. Coating and photo-polymerization were performed at the movement speed to determine a rate of polymerization of the photo-polymerizable composition, whereby the examples were obtained.

Table 1 hereunder is determination results of the polymerization rates of the photo-polymerizable composition as for each pressure-sensitive adhesive sheet according to the examples and the comparative examples.

**Table 1**

| | APPARATUS | FIRST IRRADIATING CHAMBER | | SECOND IRRADIATING CHAMBER | | NUMBER OF LAMPS | TRANSPORTATION SPEED[m/min] | POLYMERIZATION RATE[%] |
|---|---|---|---|---|---|---|---|---|
| | | LAMP USED | NUMBER OF STAGES FOR TRANSPORTATION | LAMP USED | NUMBER OF STAGES FOR TRANSPORTATION | | | |
| EXAMPLE 1 | FIGURE 1 | BOTH SIDES | 3 | UNE SIDE | 1 | 183 | 8 | 99.0 |
| EXAMPLE 2 | | ONE SIDE | 3 | ONE SIDE | 1 | 93 | 8 | 99.4 |
| EXAMPLE 3 | FIGURE 2 | ONE SIDE | 3 | ONE SIDE | 3 | 93 | 8 | 99.7 |
| EXAMPLE 4 | FIGURE 4 | ONE SIDE | 1 | ONE SIDE | 1 | 93 | 8 | 79.0 |
| EXAMPLE 5 | FIGURE 5 | BOTH SIDES | 3 | NO | NO | 180 | 8 | 93.8 |

According to the foregoing comparative experiments, as is apparent from Table 1, the examples 1 through 3 using the apparatus of present invention are the same as the comparative examples 1 to 2 (Examples 4 to 5) using the conventional apparatus in transport speed. On the other hand, the results were obtained that all the photo-polymerizable compositions produced by the apparatus of present invention each have a polymerizable rate higher than that produced by the conventional apparatus. That is, in the apparatus of present invention, the support 1 is reversed serpentinely, and the first irradiating chamber 1 is provided adjacent to the second irradiating chamber 6. Thereby, the apparatus of present invention having the same transport speed as that of the conventional apparatus can achieve a longer irradiation time per unit area of the support 1, which results in an enhanced polymerization rate.

Moreover, the lamp for ultraviolet-ray emission in the first irradiating chamber 5 is used having a different property from that in the second irradiating chamber 6. This allows control of a polymerization speed and facilitating approaching the target rate of polymerization.

This invention may be embodied as the following aspects.

(1) In Figure 4 , the foregoing exemplary apparatus may have the irradiator with lamps for ultraviolet-ray emission arranged on one side upstream of the transport path. Alternatively, the irradiator may be arranged only on the other side, i.e., downstream of the transport path.

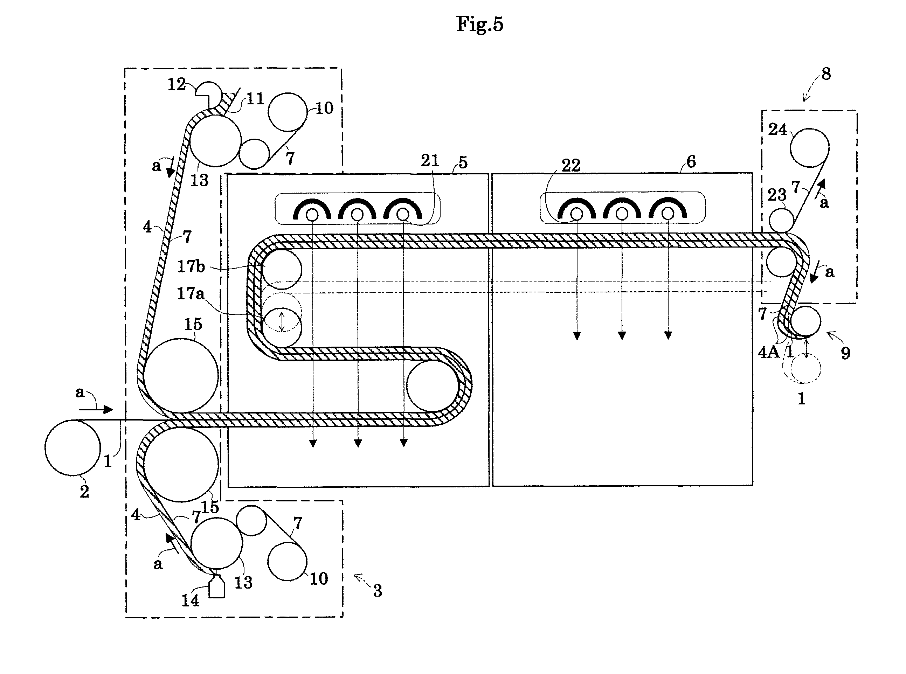

(2) In the foregoing exemplary apparatus, the light intensity may be changed through adjustment of the distance from the first or second lamp 20 or 21 for ultraviolet-ray emission to the support 1 by combination of transport rolls having different diameters. For instance, as illustrated in Figure 5, the first transport roll 16a has a diameter smaller than the first transport roll 16 in the main example of present invention and two second transport rolls 17a, 17b are provided. Such configuration may be adopted.

Specifically, when the first transport roll 16a is replaced with another roll having a larger diameter, upward and downward movement of the second transport roll 17a can cause the serpentine support 1 to be moved horizontally. The foregoing configuration may further include second lamps 21 for ultraviolet-ray emission, similar to Figure 3.

Moreover, for controlling the light intensity, a filter may be provided between the transport path serpentinely. Alternatively, for controlling the light intensity, output voltages of the first to third lamps 20 to 22 for ultraviolet-ray emission may be controlled. Furthermore, combination of these modifications may be adopted.

(3) In the apparatus according to Example 2 mentioned above, the third lamps 22 for ultraviolet-ray emission are arranged only on the lower side of the apparatus for irradiating the support 1 with ultraviolet rays from the lower side thereof. Such a construction may be adopted. Alternatively, the lamps for ultraviolet-ray emission may be arranged on upper and lower sides of the apparatus for irradiating the support 1 with ultraviolet rays from the both sides.

## Claims

1. A method of producing a photo-reaction product sheet having a photo-reaction product layer obtained by performing photo-reaction to a photo-reactive composition layer formed on a support with light from irradiators, the method comprising:
forming the photo-reactive composition layer on the support with transparency while moving the support in one direction, the photo-reactive composition layer having transparency as a photo-polymerizable composition layer used for obtaining a pressure-sensitive adhesive layer with photo-polymerization;
reversing the support at least once as to move the support in a direction opposite to the one direction to generate a serpentine transport path;
irradiating the support with light from a first irradiator in a first irradiating area in which the support prior to reverse and the support subsequent to reverse face to each other serpentinely;
photo-polymerizing the entire photo-reactive composition layer on the serpentine support while transmitting the light through the support and the photo-reactive composition layer formed on the support; and
photo-polymerizing the photo-reactive composition layer by emitting the light thereto in a second irradiating area, adjacent to the first irradiating area, with a second irradiator arranged therein having a light source different from that of the first irradiator in property.

2. The method of producing the photo-reaction product sheet according to claim 1, wherein
the light is applied to the support reversed in the first irradiating area and transported serpentinely from outside of at least either a lowermost stage or an uppermost stage of the support.

3. The method of producing the photo-reaction product sheet according to claim 1 or 2, wherein
intensity of the light transmitted through the support and the photo-reactive composition layer on the transport path is controlled by changing an irradiation distance of the light with variation in diameter of a roll for reversing the support in the first irradiating area.

4. The method of producing the photo-reaction product sheet according to any of claims I to 3, wherein
intensity of the light transmitted through the support and the photo-reactive composition layer on the transport path is controlled by controlling output voltages of the light irradiator in the first irradiating area.

5. The method of producing the photo-reaction product sheet according to any of claims 1 to 4, wherein
the photo-reactive composition layer is formed on both front and rear faces of the support.

6. The method of producing the photo-reaction product sheet according to any of claims 1 to 5, wherein
the photo-reactive composition layer formed on an optical transparent separating liner is joined to the support, and
the support is irradiated with light while the photo-reactive composition layer is covered with the optical transparent separating liner, whereby the photo-reactive composition layer is photo-polymerized.

7. The method of producing the photo-reaction product sheet according to any of claims 1 to 6, wherein
a photo-reaction rate of the photo-reactive composition layer is set to be 20% or more upon first reverse of the support.

8. The method of producing the photo-reaction product sheet according to any of claims 1 to 7, wherein
luminance of the light on the photo-reaction composition layer on the support transported within the first irradiating area lies in a range of 0.1 to 15 m W/cm².

9. An apparatus of producing a photo-reaction product sheet having a photo-reaction product layer obtained by performing photo-reaction to a photo-reactive composition layer formed on a support with light from irradiators, comprising:
a coating device confgured to coat the support with the photo-reactive composition layer with transparency while moving the support with transparency in one direction, the photo-reactive composition layer being a photo-polymerizable composition layer undergoing photo-polymerization with light from the light irradiators to obtain a pressure-sensitive adhesive layer;
a reversing mechanism configured to reverse the support so as to move in a direction opposite to the one direction;
a first irradiator configured to perform photo-polymerization to the entire serpentine photo-reactive composition layer on the support while light transmits through the support and the photo-reactive composition layer formed on the support in a first irradiating area in which a serpentine transportation path is formed with the support prior to reverse and the support subsequent to reverse facing to each other serpentinely; and
a second irradiator configured to perform photo-polymerization to the photo-reactive composition layer on the support with a light source arranged therein different from that of the first irradiator in property.

10. The apparatus of producing a photo-reaction product sheet according to claim 9, wherein
the first irradiator irradiates the support in the first irradiating area with the light from outside of at least either a lowermost stage or an uppermost stage of the support that is reversed and transported serpentinely.
